# EUROPEAN PATENT SPECIFICATION

(11) **EP 2 865 260 B1**
(45) Date of publication and mention of the grant of the patent: **08.04.2020**
(21) Application number: 14188301.7
(22) Date of filing: 09.10.2014
(51) Int. Cl.: A01G 22/10, A01G 13/02

(54) **Mini-tunnel for an asparagus bed**
Minitunnelsystem für einen Spargeldamm
Serre à tunnel pour un lit d'asperges

(30) Priority: 17.10.2013 NL 2011629
(43) Date of publication of application: 29.04.2015
(73) Proprietor: Engels Familie Holding B.V., 5981 NC Panningen (NL)
(72) Inventor: Engels, Franciscus Maria, 5988 NL Helden (NL); Engels, Marcus Franciscus, 5988 NL Helden (NL); Engels, Christiaan Michiel, 5913 RR Venlo (NL)
(74) Representative: Algemeen Octrooi- en Merkenbureau B.V.

(56) References cited:
- DE-A1-102011 001 917
- DE-B3-102010 047 591

## Description

The invention relates to a mini tunnel system for an asparagus bed, comprising a foil element which is held spaced from the asparagus bed by means of a multitude of holder elements arranged in the longitudinal direction of the asparagus bed, each of which holder elements comprises a fixing part which is fixed to a ground surface near or on the asparagus bed, as well as a foil supporting part which is in contact with the foil element.

The invention further relates to a method for producing a mini tunnel system.

Such a mini tunnel system is known from DE 10 2010 047 591 B3. The known mini tunnel system comprises an asparagus bed and a multitude of holder elements arranged in spaced-apart relationship in the longitudinal direction of the asparagus bed. A foil element is arranged over the holder elements. The holder element is substantially U-shaped, comprising two legs interconnected by a bar-shaped support member. The legs extend into the ground near the asparagus bed with one end, so that the support member extends substantially parallel to the ground surface. The foil element is supported on the support member, so that the foil element is held spaced from the asparagus bed. In this way a heat effect is obtained on the asparagus bed and an insulating layer is provided between the foil element and the asparagus bed, as it were. The effect of the insulating layer is an improved growth of the asparagus. The part of the support member that is in contact with the foil element extends in a substantially straight line, parallel to the ground surface.

DE 10 2010 047 591 B3 in particular discloses C-shaped, U-shaped or V-shaped holder elements.

A drawback of the known mini tunnel system is that the foil element can become damaged in use.

Accordingly it is an object of the present invention to provide a mini tunnel system by means of which damage to the foil element is reduced or even prevented altogether.

In order to achieve that object, the invention provides a mini tunnel system as defined in claim 1. The mini tunnel system is characterised in that the foil supporting part extends in the longitudinal direction of the asparagus bed, substantially at an angle different from 0° relative to the ground surface. The part of the foil supporting part that faces the foil element is disposed substantially at an angle relative to the ground surface, and thus the foil supporting part and the foil element that is in contact therewith extend substantially at an angle different from 0° relative to the ground surface. By this is meant that the parts of the foil element and the foil supporting part that are in contact with each other extend substantially obliquely (non-parallel) relative to the plane formed by the ground surface. It has been found that when the mini tunnel system according to the present invention is used, damage to the foil element is reduced or even prevented altogether, because the foil supporting part that extends substantially at an angle different from 0° supports the foil element over a relatively greater length thereof. The stresses in the foil element are more evenly distributed. Thus, the occurrence of local and/or high stresses in the foil element is prevented, which reduces the risk of damage. The object of the present invention is thus achieved.

It is noted in this regard that damage to the foil element in the mini tunnel system according to the prior art mainly takes place at the corner parts of the holder element, or, in other words, those parts of the holder element where the legs of the U (fixing part) merge into the base of the U (foil supporting part). Because the part of the holder element between the corners is substantially parallel to the ground, no support takes place at that location. Consequently, the stresses in the foil element caused by its own weight or additional loads caused by weather conditions such as wind are greatest at the corners. In the mini tunnel system according to the invention, however, the holder element is configured so that the contact area between the foil element and the foil supporting part has been increased in comparison with the prior art by having the foil supporting part extend at an angle different from 0° rather than making it substantially flat (as is the case in the prior art), or, in one embodiment, giving it a convex shape (with a convex back), a curved shape or a circular arc shape. Because of this, the foil element is supported like a sort of tent by the foil supporting part, thereby preventing point loads and thus the risk of damage.

It is conceivable in that regard that the parts that are in contact with each other extend completely obliquely, i.e. completely at an angle different from 0°, relative to the ground surface. It is also conceivable, however, that the parts that are in contact with each other do not extend completely obliquely, or, in other words, not completely at an angle different from 0° relative to the ground surface but partially at an angle larger than 0°, partially parallel, and partially at an angle smaller than 0° (curved, for example circular arc profile) relative to the ground surface. A relatively small part of the foil supporting part extends parallel to the ground surface in that case. The part that extends parallel to the ground surface is preferably less than 50%, more preferably less than 33%, quite preferably less than 16%, most preferably less than 8%, of the total part of the foil supporting part that faces the foil element. The smaller the part of the foil supporting part which faces the foil element and which extends parallel to the ground surface, the smaller the risk of damage to the foil element.

The phrase "substantially at an angle different from 0°" is understood to mean that at least 50%, preferably more than 67%, even more preferably more than 84%, most preferably more than 92%, of the part of the foil supporting part that faces the foil element extends at an angle other than 0° relative to the ground surface (horizontal). It is noted in that regard that the angle may be larger than 0° or smaller than 0°, which will for example be the case if the foil supporting part has an arcuately curved shape.

Further advantageous embodiments form the subject matter of the dependent claims, a few embodiments of which and their advantages will be discussed in more detail hereinafter.

A good stress distribution in the foil element is obtained if the foil supporting part has a substantially curved, in particular circular arc shape. The radius of curvature of the foil supporting part may in that case range between 0.5 and 6 times the distance between the ground surface and the foil supporting part. In one embodiment, the radius of curvature is about 300 cm, at a length of the foil supporting part of about 100 cm and a length of the fixing part of about 90 cm. Other dimensions, using the same or similar proportions are conceivable, of course. In one embodiment, the foil supporting part may extend over a circular arc that ranges between 20° and 90°.

A good usability of the holder element is obtained if the holder element has a substantially symmetrical configuration. A correct placement of the holder element is thus ensured.

In one embodiment, the holder element is substantially U-shaped, with the foil supporting part forming the base of the U and the holder element comprising two fixing elements that form the legs of the U. Such an embodiment is easy to produce. Furthermore, such an embodiment also ensures an accurate and stable placement of the holder element, because the legs of the U form fixing elements of the holder element.

In an illustrative embodiment, the fixing part and the foil supporting part have dimensions of about 90 cm and 100 cm, respectively. Other dimensions are conceivable, of course.

In one embodiment, the fixing part of the holder element is connected to the foil supporting part of the holder element by means of a connecting part, with the connecting part extending at an angle different from 0° to the foil supporting part and the fixing part. The connecting part, having the shape of a convex ridge, for example, provides additional spring force in the holder element.

The connecting part may extend at an angle that ranges between 100° and 150° relative to the fixing part. In one embodiment, the angle with the ground surface is about 25°.

It is preferable in that regard if the connecting part makes a larger angle with the ground surface than the end part of the foil supporting part that is connected thereto. In other words, at the transition from the end part of the foil supporting part to the connecting part, the connecting part will extend at a larger angle further in the direction of the ground. In this way it is ensured that the connecting part cannot exert a large pressure on the foil element, thereby preventing damage to the foil element.

It is noted in that regard that the angle which the connecting part makes with the ground, 25° in one embodiment, although larger or smaller angles are conceivable, also provides a correcting effect for a harvesting machine that may be used. Such a harvesting machine is for example known from NL 2009501 in the name of the present applicant, which application is to be considered to be incorporated herein by reference. When such a harvesting machine is used, the machine will not directly hit the edge of the holder element if a holder element is not inserted deep enough into the ground or if the machine has sunk too far into the ground, but the holder element will gradually pass under the machine. It is preferable if the angle of the connecting part with the ground is smaller than 45°.

The foil supporting part may be positioned entirely above the fixing part and the connecting part relative to the ground surface. In one embodiment, the uppermost point of the foil supporting part is located above the connecting part (and above the fixing part). The distance between the uppermost point of the foil supporting part and the connecting part may range between 10mm and 40 mm, preferably it ranges between 20 mm and 30 mm.

A relatively inexpensive embodiment is obtained if the holder element and the fixing part and the foil supporting part are formed integrally. The holder element may for example be a preformed bar, plate or beam. Each of the bar, plate or beam can be formed into a holder element according to the present invention in a relatively simple and inexpensive manner. If the holder element comprises a connecting part, said connecting part may also be formed integrally.

If the holder elements can be spaced a suitable distance apart, seen in the longitudinal direction, the foil element can extend in a substantially continuous wave pattern, for example a sinusoidal pattern, seen in a plane which comprises the holder elements disposed on one side of the asparagus bed, in the longitudinal direction thereof. The period of the waves is determined by the dimensions of the holder elements, in particular by the dimensions (length in the longitudinal direction of the asparagus bed) of the foil supporting part on the one hand, and by the spacing between two adjacent holder elements on the other hand. The phrase "continuous wave pattern" is understood to mean that the foil element comprises a substantially gradual change of the tangent line, which is for example the case with a sinusoid. Preferably, the wave motion is not interrupted by local crests or troughs in that case. In a preferred embodiment, the foil element is, in between two holder elements disposed one behind the orther on one side of the asparagus bed, in that case located between the foil supporting part and the ground surface, as seen in the plane formed by said two holder elements. At least the lowermost point of the foil element thus extends to below the foil supporting part. In this way the foil element will extend evenly, so that stresses in the foil element are prevented.

The holder elements are preferably placed on two sides of the asparagus bed. The holder elements may be disposed opposite each other, seen in a direction transversely to the longitudinal direction, or be staggered in the longitudinal direction relative to each other.

It is preferable if the holder element is substantially flat. In one embodiment, the foil supporting part of the holder element extends substantially parallel to the longitudinal direction of the asparagus bed.

In a special embodiment, the fixing part is movable relative to the foil supporting part. The fixing part is preferably elastically movable. This makes it possible to introduce some tension into the holder element upon placement in the ground. In this way some resistance is created in the case of loads being exerted thereon, for example by the wind, or by the foil element itself, so that damage to the foil element is prevented.

The holder element may be elastic to such an extent that the foil supporting part can made to exhibit a curvature. In one embodiment, the foil supporting part can for example be curved under the influence of movement relative to each other of the fixing parts (for example toward each other). Thus, a certain tension is introduced into the foil supporting part as well.

As already mentioned before, the holder element is substantially U-shaped in a desired embodiment, comprising a foil supporting part that forms the base of the U and two fixing parts that form the legs of the U.

In one embodiment, the two fixing parts of the holder element extend at an angle relative to each other in an unloaded condition of the holder element. By pivoting the fixing parts toward each other, the foil supporting part can be made to exhibit a curvature. Preferably, the fixing parts extend at an angle of 5° to 45°, in particular about 20°, relative to each other in an unloaded, uninstalled condition.

The foil supporting part can in that case be substantially straight in the unloaded condition, and a loaded condition of the holder element can be realised by moving the ends of the U toward each other, so that the foil supporting part is curved in the loaded condition. In one embodiment of the mini tunnel system, the fixing parts extend parallel to each other when installed in the ground because they are inserted into the ground in a tensioned condition.

According to one aspect of the invention, there is provided a method for producing a mini tunnel system according to the invention. The method comprises the step of placing a foil element on an asparagus bed. The method further comprises the step of installing at least two holder elements according to the present invention in a ground surface on or near the asparagus bed. The method further comprises the step of arranging a foil element on the holder elements, in such a manner that the foil supporting part and the foil element that is in contact therewith extend substantially at an angle different from 0° relative to the ground surface, seen in the longitudinal direction of the asparagus bed, such that the parts of the foil element and the foil supporting part that are in contact with each other extend substantially obliquely relative to the plane formed by the ground surface.

In one embodiment, the method comprises the step of setting up a tension in the holder element, such that the foil supporting part exhibits a substantially curved shape, in particular a circular arc shape.

The invention will now be explained in more detail with reference to a few preferred embodiments of the present invention and with reference to the appended figures, in which:
Figures 1a and 1b are a schematic side view and a cross-sectional view, respectively, of a mini tunnel system according to the present invention;
Figure 2 is a view of a holder element for a mini tunnel system according to the present invention;
Figure 3 is a view of a holder element according to the present invention in an unloaded condition.

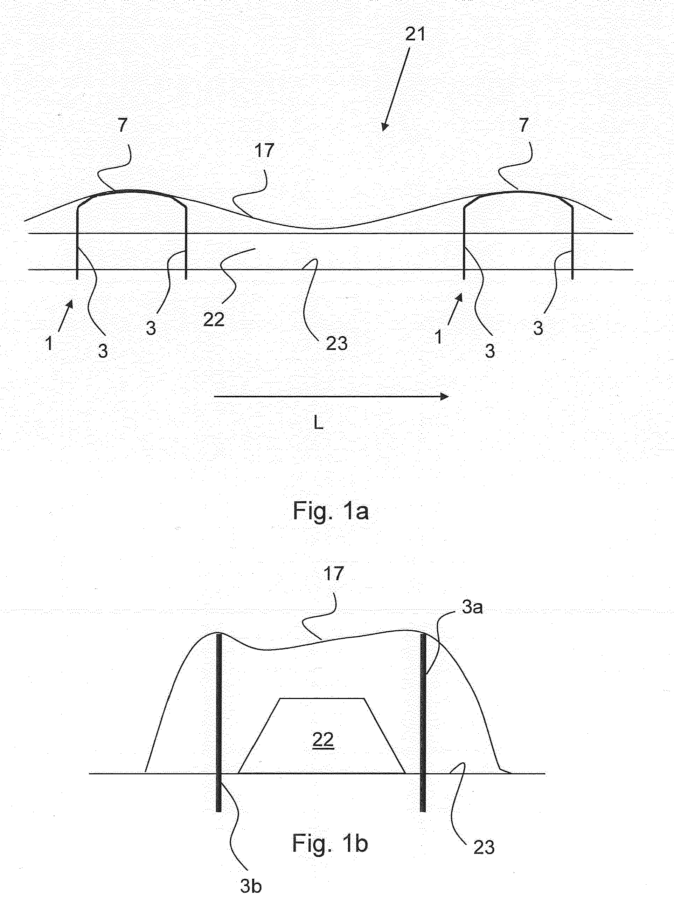

Figure 1a is a schematic side view of a mini tunnel system 21 according to one embodiment of the present invention. In the figure, a ground surface 23 is schematically indicated by a line. Provided on the ground surface 23 is an asparagus bed 22, which extends in a longitudinal direction of the asparagus bed 22 indicated by the arrow L, and which extends some distance (not indicated) upward from the ground surface 23. The mini tunnel system comprises a few spaced-apart (in the longitudinal direction L) holder elements 1, which are placed in the ground 23. The holder elements 1 are substantially U-shaped, with the legs of the U forming fixing parts 3 of the holder element, by means of which fixing parts 3 the holder element 1 is fixed in the ground 23. The two fixing parts 3 of each holder element extend substantially parallel to each other and substantially transversely to the plane formed by the ground surface 23. Between the two fixing parts 3, a foil supporting part 7 extends. Said foil element 17 forms the base of the U-shaped holder element 1. A foil element 17 is supported on the two foil supporting parts 7. In one embodiment, said foil element is a transparent foil element 17. Additionally, a further foil element (not shown) may be provided, which may be a foil having a white side and a black side, for example. A mini tunnel system which makes use of two foil elements configured in this way (one being transparent and one having a black side and a white side) is known per se to the skilled person.

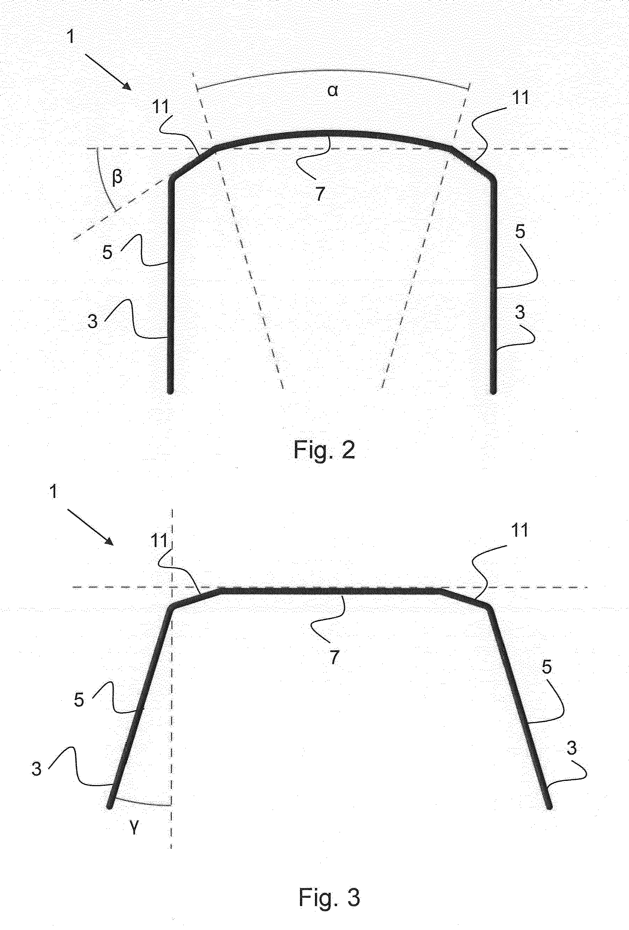

Figure 1a is a sectional view of the foil element 17, viewed in a plane which comprises both holder elements 1. As the figure shows, the foil element 17 extends in a wave-like manner. The foil element exhibits a wave pattern, in the illustrated case more specifically a sinusoidal pattern. At the location of the holder elements 1, the foil element 17 exhibits a crest, or highest point, and between the two older elements 1 the foil element 17 exhibits a trough. The foil element 17 thus extends in a wave pattern along the length L of the asparagus bed. Said wave pattern is obtained in that the holder element 1 is configured so that the part of the foil supporting part 7 that faces the foil element 17 extends substantially at an angle different from 0° relative to the ground surface. In the illustrated embodiment, the foil supporting part exhibits a continuously rising and falling pattern, with only a relatively small part actually extending parallel to the ground surface 23. The holder element 1 will be discussed in more detail yet with reference to figure 2 and figure 3.

It is noted that in the situation in figure 1a, a sectional view of the foil element 17 is shown. It will be understood that the foil element 17 extends to or near the ground surface 23 on either side of the asparagus bed 22. An example of this is shown in figure 1b. On a right-hand side, a holder element 3a according to the present invention is provided. On the left-hand side, an identical or a similar holder element 3b is provided, which, to the viewer's eye, is disposed further away than the right-hand holder element 3a. Because of the shape of the holder element 3, the foil element 17 exhibits a continuous wave pattern also in cross-sectional view, which reduces any stresses in the foil element.

Figure 2 shows in greater detail a holder element 1 of the mini tunnel system of figures 1a and 1b. The holder element 1 is U-shaped and comprises two fixing parts 3, which form the legs 5 of the U, which fixing parts are interconnected by means of a foil supporting part 7, which forms the base of the U. The connection between the fixing parts 3 and the foil supporting part 7 is in every case effected by means of a connecting part 11, which extends at an angle relative to the associated fixing parts 3 and the foil supporting part 7. The angle β which the connecting part 11 makes with the ground surface (horizontal) in an installed position of the holder element 1 approximately equals 25 degrees. Preferably, the angle of the connecting part relative to the ground surface is larger than the angle of the end part of the foil supporting part that is connected to the connecting part. In a desired embodiment, in which a harvesting machine that may be used cannot catch on the holder element, or at least less easily so, the connecting part is configured so that it makes an angle with the ground surface of less than 45°, for example an angle of 25°, although other angles are also conceivable. As the figure further shows, the foil supporting part extends in a continuous, smooth manner between the two connecting parts 11, with the foil supporting part 7 first exhibiting an upward slope from the left to the right and subsequently a downward slope. The foil supporting part 7 thus makes an angle substantially different from 0° with the ground surface over its entire length. Only at the transition from rising to falling does the foil supporting part 7 extend horizontally. The total length along which the foil supporting part 7 extends horizontally is very small, however. In the illustrated embodiment, the foil supporting part 7 has the shape of a circular arc. An associated radius of curvature of the foil supporting part preferably ranges between 0.5 and 4 times the distance between the ground surface and the foil supporting part, or between 0.5 and 4 times the length of the leg 5 of the U-shaped holder element 1. In particular, the radius of curvature may range between 1 and 2 times the respective value.

The associated circular arc α preferably ranges between 20° and 90°. In the illustrated embodiment, the circular arc α is about 34°.

In the illustrated embodiment, the foil supporting part 7 in its entirety extends above the connecting parts 11. In figure 1, the holder element 1 is symmetrical in shape, in particular mirror-symmetrical relative to an axis which extends parallel to the legs 5 of the holder element 1 and which is placed centrally between the legs 5. Asymmetrical versions are also conceivable, however. The base of the U-shaped holder element 1 is formed by a foil supporting part 7 that extends in a substantially straight line. The legs extend at an angle γ relative to a transverse line to the foil supporting part 7. The angle γ is about 20°, but a larger or smaller angle may be selected. Preferably, the angle ranges between 10° and 45°. Connecting parts 11, which extend at an angle relative to the legs 5 and the foil supporting part 7, connect the legs 5 to the foil supporting part 7.

The embodiment shown in figure 3 makes it possible to bias the holder element 1 by moving the legs 5 together until the situation shown in figure 2, or at least a similar situation, is reached, and subsequently inserting the legs into the ground surface with their fixing parts 3. Upon movement together of the legs 5, elastic energy is stored in the foil supporting part 7, so that the foil supporting part will assume a curved shape, in particular the circular arc shape that is shown in figure 2. The embodiment of the holder element 1 that is shown in figure 3 can be produced in a very simple manner, merely requiring the bending of a straight bar in four places.

The skilled person will appreciate that in the foregoing the invention has been described with reference to a few possible embodiments, which are preferred. The invention is not limited to these embodiments, however. Many modifications are conceivable within the scope of the invention. The protection being sought is determined by the appended claims.

## Claims

1. A mini tunnel system (21) for an asparagus bed, comprising a foil element (17) which is held spaced from the asparagus bed by means of a multitude of holder elements (1) arranged in the longitudinal direction (L) of the asparagus bed, wherein each of the holder elements (1) comprises a fixing part (3), which is fixed to a ground surface (23) near or on the asparagus bed, and wherein each of the holder elements (1) comprises a foil supporting part (7) which is in contact with the foil element (17), **characterised in that** the foil supporting part (7) and the foil element that is in contact therewith extend in the longitudinal direction (L) of the asparagus bed substantially at an angle different from 0° relative to the ground surface (23), such that the parts of the foil element and the foil supporting part that are in contact with each other extend substantially obliquely relative to the plane formed by the ground surface.

2. A mini tunnel system (21) according to claim 1, wherein the foil supporting part (7) has a substantially curved, in particular circular arc shape.

3. A mini tunnel system (21) according to claim 2, wherein the foil supporting part (7) has a circular arc shape, wherein the radius of curvature of the foil supporting part (7) ranges between 0.5 and 6 times the distance between the ground surface (23) and the foil supporting part (7), in particular between 2 and 4 times the distance between the ground surface (23) and the foil supporting part (7).

4. A mini tunnel system (21) according to claim 3, wherein the foil supporting part (7) extends over a circular arc that ranges between 20° and 90°.

5. A mini tunnel system (21) according to any one of the preceding claims, wherein the holder element (1) is substantially symmetrical in shape.

6. A mini tunnel system (21) according to any one of the preceding claims, wherein the holder element (1) is substantially U-shaped, wherein the foil supporting part (7) forms the base of the U and wherein the holder element (1) comprises two fixing elements that form the legs of the U.

7. A mini tunnel system (21) according to any one of the preceding claims, wherein the fixing part (3) is connected to the foil supporting part (7) of the holder element (1) by means of a connecting part, wherein the connecting part extends at an angle different from 0° to the foil supporting part (7) and the fixing part (3).

8. A mini tunnel system (21) according to claim 7, wherein the connecting part extends at an angle that ranges between 100° and 150° relative to the fixing part (3).

9. A mini tunnel system (21) according to claim 7 or 8, wherein the foil supporting part (7) is positioned entirely above the fixing part (3) and the connecting part relative to the ground surface.

10. A mini tunnel system (21) according to any one of the preceding claims, wherein the holder element (1) is formed integrally with the fixing part (3) and the foil supporting part (7), and if dependent on claims 7-9, also with the connecting part.

11. A mini tunnel system (21) according to any one of the preceding claims, wherein the foil element (17) extends in a substantially continuous wave pattern, for example a sinusoidal pattern, seen in a plane which comprises the holder elements (1) disposed on one side of the asparagus bed, in the longitudinal direction (L) thereof.

12. A mini tunnel system (21) according to claim 11, wherein, in between two adjacent holder elements (1) disposed one behind the other on one side of the asparagus bed, the foil element (17) is located between the foil supporting part (7) and the ground surface, as seen in the plane formed by the adjacent holder elements (1).

13. A mini tunnel system (21) according to any one of the preceding claims, wherein at least the foil supporting part (7) of the holder element (1) extends substantially parallel to the longitudinal direction (L) of the asparagus bed.

14. A method for producing a mini tunnel system (21) according to any one of claims 1-13, comprising the steps of:
installing at least two holder elements (1), each comprising a fixing part (3) and a foil supporting part (7), in a ground surface (23) on or near the asparagus bed, and **characterized by**
arranging a foil element (17) over the holder elements (1), in such a manner that the foil supporting part (7) and the foil element (17) that is in contact therewith extend substantially at an angle different from 0° relative to the ground surface, seen in the longitudinal direction (L) of the asparagus bed, such that the parts of the foil element and the foil supporting part that are in contact with each other extend substantially obliquely relative to the plane formed by the ground surface.

15. A method according to claim 14, comprising the step of setting up a tension in the holder element, such that the foil supporting part (7) exhibits a substantially curved shape, in particular a circular arc shape.

## Patentansprüche

1. Minitunnelsystem (21) für ein Spargelbeet, das ein Folienelement (17) umfasst, das mittels einer Vielzahl von Halterungselementen (1) vom Spargelbeet beabstandet gehalten wird, die in Längsrichtung (L) des Spargelbeetes angeordnet sind, wobei jedes der Halterungselemente (1) ein Befestigungsteil (3) aufweist, das an einer Bodenfläche (23) in der Nähe von oder auf dem Spargelbeet befestigt ist, und wobei jedes der Halterungselemente (1) ein Folientragteil (7) aufweist, das mit dem Folienelement (17) in Kontakt steht, **dadurch gekennzeichnet, dass** das Folientragteil (7) und das Folienelement, das damit in Kontakt steht, sich in der Längsrichtung (L) des Spargelbeetes im Wesentlichen unter einem von 0° verschiedenen Winkel zur Bodenoberfläche (23) erstrecken, so dass die Teile des Folienelements und des Folientragteils, die miteinander in Kontakt stehen, sich im Wesentlichen schräg zu der von der Bodenoberfläche gebildeten Ebene erstrecken.

2. Minitunnelsystem (21) nach Anspruch 1, wobei das Folientragteil (7) eine im Wesentlichen gekrümmte, insbesondere kreisbogenförmige, Form aufweist

3. Minitunnelsystem (21) nach Anspruch 2, wobei das Folientragteil (7) eine Kreisbogenform hat, wobei sich der Krümmungsradius des Folientragteils (7) zwischen dem 0,5- und 6-fachen des Abstandes zwischen der Bodenoberfläche (23) und dem Folientragteil (7) bewegt, insbesondere zwischen dem 2- und 4-fachen des Abstands zwischen der Bodenoberfläche (23) und dem Folientragteil (7).

4. Minitunnelsystem (21) nach Anspruch 3, wobei sich das Folientragteil (7) über einen Kreisbogen erstreckt, der zwischen 20° und 90° liegt

5. Minitunnelsystem (21) nach einem der vorstehenden Ansprüche, wobei das Halteelement (1) im Wesentlichen symmetrisch geformt ist

6. Minitunnelsystem (21) nach einem der vorstehenden Ansprüche, wobei das Halteelement (1) im wesentlichen U-förmig ist, wobei das Folientragteil (7) die Basis des U bildet und wobei das Halteelement (1) zwei Befestigungselemente aufweist, die die Schenkel des U bilden.

7. Minitunnelsystem (21) nach einem der vorstehenden Ansprüche, wobei das Befestigungsteil (3) mit dem Folientragteil (7) des Halteelements (1) mittels eines Verbindungsteils verbunden ist, wobei sich das Verbindungsteil in einem von 0° verschiedenen Winkel zum Folientragteil (7) und zum Befestigungsteil (3) erstreckt.

8. Minitunnelsystem (21) nach Anspruch 7, wobei sich das Verbindungsteil in einem Winkel zwischen 100° und 150° relativ zum Befestigungsteil (3) erstreckt

9. Minitunnelsystem (21) nach Anspruch 7 oder 8, wobei das Folientragteil (7) vollständig über dem Befestigungsteil (3) und dem Verbindungsteil relativ zur Bodenoberfläche positioniert ist.

10. Minitunnelsystem (21) nach einem der vorstehenden Ansprüche, wobei das Halteelement (1) einstückig mit dem Befestigungsteil (3) und dem Folientragteil (7) ausgebildet ist, und, falls von den Ansprüchen 7-9 abhängig, auch mit dem Verbindungsteil.

11. Minitunnelsystem (21) nach einem der vorstehenden Ansprüche, wobei sich das Folienelement (17) in einem im Wesentlichen kontinuierlichen Wellenmuster, beispielsweise einem Sinusmuster, erstreckt, gesehen in einer Ebene, die die auf einer Seite des Spargelbeetes angeordneten Halterungselemente (1) umfasst, in Längsrichtung (L) davon.

12. Minitunnelsystem (21) nach Anspruch 11, wobei sich zwischen zwei benachbarten Halterungselementen (1), die hintereinander auf einer Seite des Spargelbeetes angeordnet sind, das Folienelement (17) zwischen dem Folientragteil (7) und der Bodenoberfläche befindet, gesehen in der Ebene, die durch die angrenzende Halterungselemente (1) gebildet wird.

13. Minitunnelsystem (21) nach einem der vorstehenden Ansprüche, wobei sich zumindest das Folientragteil (7) des Halterungselementes (1) im Wesentlichen parallel zur Längsrichtung (L) des Spargelbeetes erstreckt

14. Verfahren zur Herstellung eines Minitunnelsystems (21) nach einem der Ansprüche 1-13, aufweisend die Schritte:
Installieren von mindestens zwei Halterungselementen (1), die jeweils ein Befestigungsteil (3) und ein Folientragteil (7) aufweisen, in einer Bodenfläche (23) auf oder nahe dem Spargelbeet, **gekennzeichnet durch**
Anordnen eines Folienelements (17) über den Halterungselementen (1), in einer solchen Weise, dass das Folientragteil (7) und das damit in Kontakt stehende Folienelement (17) sich im Wesentlichen in einem von 0° verschiedenen Winkel zur Bodenoberfläche, gesehen in Längsrichtung (L) des Spargelbeetes, erstrecken, so dass die Teile des Folienelements und des Folientragteils, die miteinander in Kontakt sind, sich im Wesentlichen schräg zu der von der Bodenoberfläche gebildeten Ebene erstrecken.

15. Verfahren nach Anspruch 14, umfassend den Schritt des Aufbaus einer Spannung im Halterungselement, so dass das Folientragteil (7) eine im Wesentlichen gekrümmte Form, insbesondere eine Kreisbogenform, ausbildet.

## Revendications

1. Système de mini tunnel (21) pour un lit d'asperges, comprenant un élément en feuille (17) qui est maintenu à distance du lit d'asperges au moyen d'une multitude d'éléments de maintien (1) agencés dans la direction longitudinale (L) du lit d'asperges, où chacun des éléments de maintien (1) comprend une partie de fixation (3), qui est fixée à une surface du sol (23) près du lit d'asperges ou sur celui-ci, et où chacun des éléments de maintien (1) comprend une partie de support de feuille (7) qui est en contact avec l'élément en feuille (17), **caractérisé en ce que** la partie de support de feuille (7) et l'élément en feuille qui est en contact avec celle-ci s'étendent dans la direction longitudinale (L) du lit d'asperges essentiellement selon un angle différent de 0° par rapport à la surface du sol (23), de sorte que les parties de l'élément en feuille et la partie de support de feuille qui sont en contact s'étendent de manière essentiellement oblique par rapport au plan formé par la surface du sol.

2. Système de mini tunnel (21) selon la revendication 1, dans lequel la partie de support de feuille (7) a une forme essentiellement incurvée, en particulier d'arc circulaire.

3. Système de mini tunnel (21) selon la revendication 2, dans lequel la partie de support de feuille (7) a une forme d'arc circulaire, où le rayon de courbure de la partie de support de feuille (7) est compris entre 0,5 et 6 fois la distance entre la surface du sol (23) et la partie de support de feuille (7), en particulier entre 2 et 4 fois la distance entre la surface du sol (23) et la partie de support de feuille (7).

4. Système de mini tunnel (21) selon la revendication 3, dans lequel la partie de support de feuille (7) s'étend sur un arc circulaire qui est compris entre 20° et 90°.

5. Système de mini tunnel (21) selon l'une quelconque des revendications précédentes, dans lequel l'élément de maintien (1) est de forme essentiellement symétrique.

6. Système de mini tunnel (21) selon l'une quelconque des revendications précédentes, dans lequel l'élément de maintien (1) est essentiellement en forme de U, où la partie de support de feuille (7) forme la base du U et où l'élément de maintien (1) comprend deux éléments de fixation qui forment les branches du U.

7. Système de mini tunnel (21) selon l'une quelconque des revendications précédentes, dans lequel la partie de fixation (3) est reliée à la partie de support de feuille (7) de l'élément de maintien (1) au moyen d'une partie de liaison, où la partie de liaison s'étend selon un angle différent de 0° par rapport à la partie de support de feuille (7) et à la partie de fixation (3).

8. Système de mini tunnel (21) selon la revendication 7, dans lequel la partie de liaison s'étend selon un angle compris entre 100° et 150° par rapport à la partie de fixation (3).

9. Système de mini tunnel (21) selon la revendication 7 ou 8, dans lequel la partie de support de feuille (7) est positionnée entièrement au-dessus de la partie de fixation (3) et de la partie de liaison par rapport à la surface du sol.

10. Système de mini tunnel (21) selon l'une quelconque des revendications précédentes, dans lequel l'élément de maintien (1) est formé d'un seul tenant avec la partie de fixation (3) et la partie de support de feuille (7), et s'il dépend des revendications 7 à 9, également avec la partie de liaison.

11. Système de mini tunnel (21) selon l'une quelconque des revendications précédentes, dans lequel l'élément en feuille (17) s'étend selon un motif d'onde essentiellement continu, par exemple un motif sinusoïdal, vu dans un plan qui comprend les éléments de maintien (1) disposés sur un côté du lit d'asperges, dans la direction longitudinale (L) de celui-ci.

12. Système de mini tunnel (21) selon la revendication 11, dans lequel, entre deux éléments de maintien adjacents (1) disposés l'un derrière l'autre sur un côté du lit d'asperges, l'élément en feuille (17) est situé entre la partie de support de feuille (7) et la surface du sol, tel que vu dans le plan formé par les éléments de maintien adjacents (1).

13. Système de mini tunnel (21) selon l'une quelconque des revendications précédentes, dans lequel au moins la partie de support de feuille (7) de l'élément de maintien (1) s'étend essentiellement parallèlement à la direction longitudinale (L) du lit d'asperges.

14. Procédé de fabrication d'un système de mini tunnel (21) selon l'une quelconque des revendications 1 à 13, comprenant les étapes qui consistent :
à installer au moins deux éléments de maintien (1), comprenant chacun une partie de fixation (3) et une partie de support de feuille (7), dans une surface du sol (23) sur le lit d'asperges ou près de celui-ci, et **caractérisé par** l'étape consistant
à agencer un élément en feuille (17) au-dessus des éléments de maintien (1), de sorte que la partie de support de feuille (7) et l'élément en feuille (17) qui est en contact avec celle-ci s'étendent essentiellement selon un angle différent de 0° par rapport à la surface du sol, vu dans la direction longitudinale (L) du lit d'asperges, de sorte que les parties de l'élément en feuille et la partie de support de feuille qui sont en contact s'étendent essentiellement obliquement par rapport au plan formé par la surface du sol.

15. Procédé selon la revendication 14, comprenant l'étape consistant à créer une tension dans l'élément de maintien, de sorte que la partie de support de feuille (7) présente une forme essentiellement incurvée, en particulier une forme d'arc circulaire.
